# EUROPEAN PATENT APPLICATION

(11) **EP 2 907 731 A1**
(43) Date of publication of application: **19.08.2015**
(21) Application number: 12886412.1
(22) Date of filing: 09.10.2012
(51) Int. Cl.: B62D 25/12, E05B 77/08, E02F 9/08

(54) **LOCK DEVICE FOR HOOD OF ENGINE ROOM OF CONSTRUCTION MACHINE**

(71) Applicant: Volvo Construction Equipment AB, 631 85 Eskilstuna (SE)
(72) Inventor: LEE, Taek-Woo, Gimhae-si Gyeongsangnam-do 621-720 (KR); KIM, Seok-Won, Busan 608-794 (KR)
(74) Representative: Burger, Markus
(86) International application number: PCT/KR2012/008175
(87) International publication number: WO 2014/058085

(57) **Abstract**

Disclosed is a lock device for a hood of an engine room of a construction machine, capable of limiting the motion of the hood in the left and right directions and the forward and backward directions by an external force generated by a vibration caused during operation when the hood is closed. The lock device for a hood of an engine room of a construction machine according to the present invention comprises: a catch device mounted on the inner surface of the hood; a latch device including a latch plate mounted on an upper frame and a striker mounted on the latch plate in the forward and backward directions to attach/detach a locker of the catch device, the latch device limiting the motion of the hood in the left and right directions when the hood is closed; and a position guide which is mounted on the inner surface of the hood, and which has, at a lower end thereof, a stopper protrusion to be detachably coupled to the sliding groove formed in one side of the latch plate, the position guide limiting the motion of the hood in the forward and backward directions when the hood is closed.

## Description

### TECHNICAL FIELD

The present invention relates to a device for locking a hood of an engine room for a construction machine. More particularly, the present invention relates to such a hood locking apparatus of an engine room for a construction machine, which can limit the movement of a hood in the leftward, rightward, forward, and backward directions due to an external force caused by vibration that occurs during the operation in a state where the hood is closed.

### BACKGROUND OF THE INVENTION

In general, a hood of an engine room for an excavator or the like is maintained in a closed state at normal times so as to protect the engine, hydraulic parts and the like, which are mounted in the engine room, and is changed to an opened state so as to inspect or repair the hydraulic parts and the like. The hood of the engine room is opened directly by an operator or easily opened or closed by using an auxiliary member such as a gas spring.

The hood is made of a plastic material or a steel material of a thin plate to reduce the manufacturing cost and achieve lightweightness, and thus the hood may be deformed or damaged due to an external force caused by vibration that occurs during the operation. For this reason, a latch device and a catch device are used to prevent the hood from being moved after closing the hood that is configured so as to be frequently opened and closed to perform maintenance or the like.

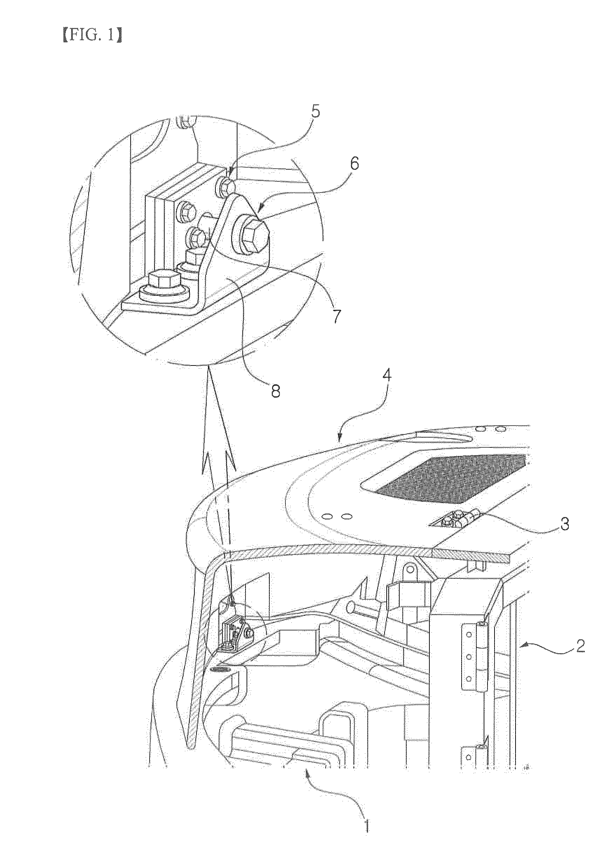

As shown in Fig. 1, in accordance with the prior art, there is provided a hook locking apparatus of an engine room for a construction machine including an upper frame 1, a cowl frame 2 installed to form an engine room on the upper frame 1, and a hood 4 openably and closably connected to the cowl frame by means of a hinge 3.

The hook locking apparatus of an engine room for a construction machine includes a locking device consisting of a catch device 5 and a latch device 6, the catch device 5 being installed on an inner surface of a hood 4 by means of a bolt or the like and the latch device 6 including a latch plate 8 installed on the upper frame 1 or a counterweight by means of a bolt or the like and a striker 7 installed on the latch plate 8 in forward and backward directions (i.e., in the traveling direction of the construction machine) so that a locker (not shown) of the catch device is engaged with or disengaged from the striker 7.

Thus, even in the case where an external force caused by vibration occurring during the operation is applied to the hood 4 in a state where the hood 4 is closed, the locking device consisting of the catch device 5 and the latch device 6 can limit the movement of the hood 4 in the leftward and rightward directions (i.e., the left and right width directions of the construction machine). However, the conventional hook locking apparatus entails a shortcoming in that the hood 4 made of a thin steel plate to exhibit flexibility may be deformed by the movement of the hood in the forward and backward directions due to an external force caused by vibration when the hood 4 is closed or opened.

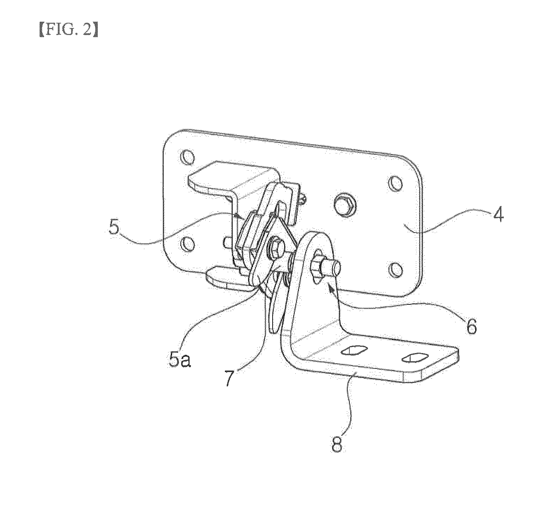

As shown in Fig. 2, in accordance with the prior art, there is provided another hook locking apparatus of an engine room for a construction machine including an upper frame 1, a cowl frame 2 installed to form an engine room on the upper frame 1, and a hood 4 openably and closably connected to the cowl frame by means of a hinge 3.

The hook locking apparatus of an engine room for a construction machine includes a locking device consisting of a catch device 5 and a latch device 6, the catch device being installed on an inner surface of a hood 4 by means of a bolt or the like and the latch device 6 including a latch plate 8 installed on the upper frame 1 or a counterweight by means of a bolt or the like and a striker 7 installed on the latch plate 8 in leftward and rightward directions (i.e., in the traveling direction of the construction machine) so that a locker (not shown) of the catch device is engaged with or disengaged from the striker 7.

Thus, even in the case where an external force caused by vibration occurring during the operation is applied to the hood 4 in a state where the hood 4 is closed, the locking device consisting of the catch device 5 and the latch device 6 can limit the movement of the hood 4 in the forward and backward directions (i.e., the traveling directions of the construction machine). In this case, the configurations of the upper frame 1, the cowl frame 2, and the hood 4 are the same as those of the corresponding elements shown in Fig. 1, and thus are denoted by the same reference numerals as used in Fig. 1.

However, the conventional hook locking apparatus also entails a shortcoming in that the hood 4 made of a thin steel plate may be deformed by the movement of the hood in the leftward and rightward directions due to an external force caused by vibration when the hood 4 is closed or opened.

### SUMMARY OF THE INVENTION

Accordingly, the present invention has been made to solve the aforementioned problems occurring in the prior art, and it is an object of the present invention to provide a hook locking apparatus of an engine room for a construction machine, which can limit the movement of the hood in the leftward, rightward, forward, and backward directions due to an external force caused by vibration occurring during the operation, thereby preventing the hood from being damaged by vibration.

Another object of the present invention is to provide a hook locking apparatus of an engine room for a construction machine, which can maintain rigidity of the hood even in the case where the hood is formed of a plastic material or a thin steel material to reduce the manufacturing cost and achieve lightweightness.

### TECHNICAL SOLUTION

To achieve the above object, in accordance with an embodiment of the present invention, there is provided a hood locking apparatus of an engine room for a construction machine including an upper frame, a cowl frame installed to form an engine room on the upper frame, and a hood openably and closably connected to the cowl frame by means of a hinge, the apparatus including:
a catch device installed on an inner surface of the hood;
a latch device including a latch plate installed on the upper frame and a striker installed on the latch plate in forward and backward directions so that a locker of the catch device is engaged with or disengaged from the striker, the latch device being configured to limit the movement of the hood in the leftward and rightward directions when the hood is closed; and
a position guide installed on the inner surface of the hood 4 and having a retaining protrusion formed at a lower end of the position guide so as to be detachably engaged with a sliding groove formed on one side thereof, the position guide being configured to limit the movement of the hood in the forward and backward directions when the hood is closed.

In a preferred embodiment of the present invention, the sliding groove may have a guide surface formed thereon so as to slant toward the hood side and the retaining protrusion may have a sliding surface slantingly formed on an underside thereof so as to be in close contact with the guide surface so that the retaining protrusion slides smoothly on the sliding groove while the hood is opened or closed.

### ADVANTAGEOUS EFFECT

The hook locking apparatus of an engine room for a construction machine in accordance with an embodiment of the present invention as constructed above has the following advantages.

The movement of the hood in the leftward, rightward, forward, and backward directions due to an external force caused by vibration occurring during the operation can be limited to prevent the damage of the hood by the vibration. Even in the case where the hood is formed of a plastic material to reduce the manufacturing cost and achieve lightweightness, rigidity of the hood can be maintained, thereby ensuring reliability.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a schematic view showing an engine room in which a hook locking apparatus of the engine room for a construction machine is mounted in accordance with the prior art;
Fig. 2 is a schematic perspective view showing a modification of a hook locking apparatus of the engine room for a construction machine is mounted in accordance with the prior art;
Figs. 3a and 3b are exploded and assembled perspective views, respectively, showing main parts of a hook locking apparatus of an engine room for a construction machine in accordance with an embodiment of the present invention; and
Fig. 4 is a view showing a use state of a hook locking apparatus of an engine room for a construction machine in accordance with an embodiment of the present invention.

### * Explanation on reference numerals of main elements in the drawings *

4: hood
5: catch device
6: latch device
7: striker
10: position guide
11: retaining protrusion
12: sliding groove
13: supporting part
14: latch plate
15: guide surface
16: sliding surface

### DETAILED DESCRIPTION OF THE INVENTION

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

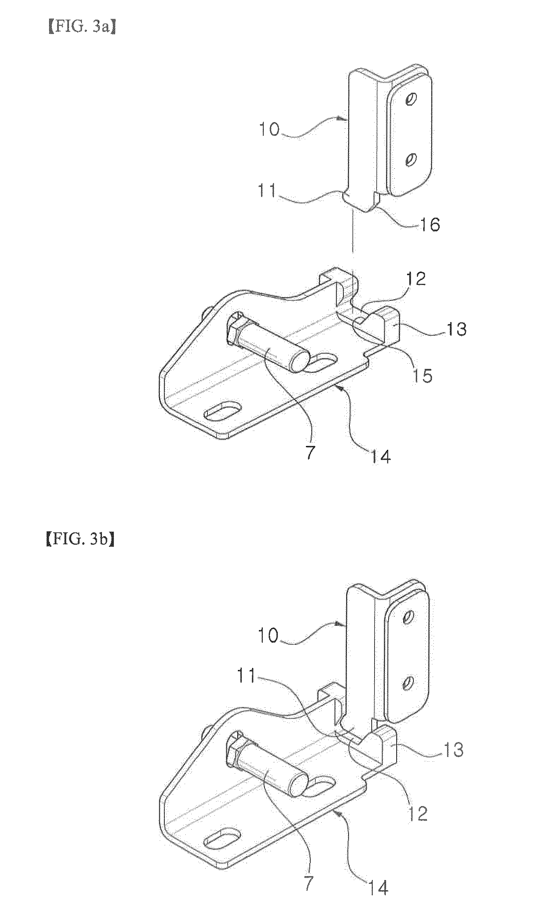

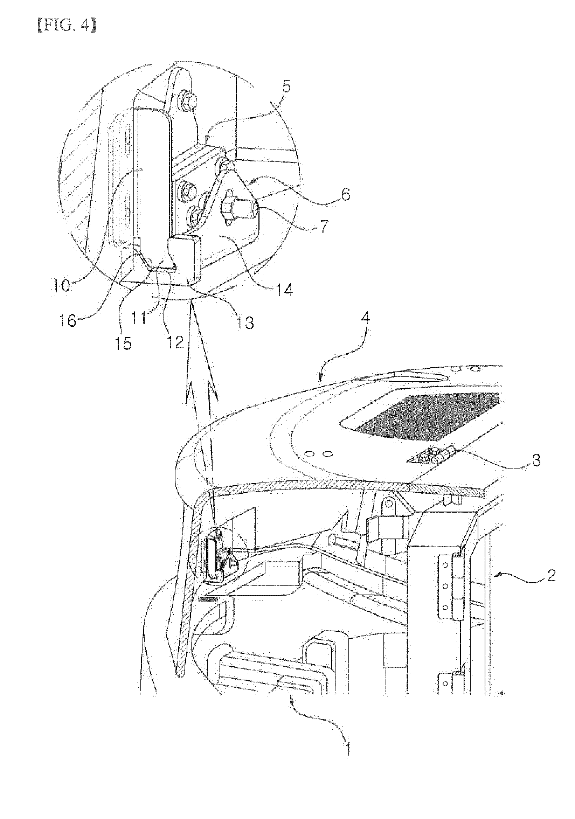

As shown in Figs. 3a and 3b, and 4, in accordance with an embodiment of the present invention, there is provided a hook locking apparatus of an engine room for a construction machine including an upper frame 1, a cowl frame 2 installed to form an engine room on the upper frame 1, and a hood 4 openably and closably connected to the cowl frame by means of a hinge 3, the apparatus including:
a catch device 5 installed on an inner surface of the hood 4 by means of a bolt or the like;
a latch device 6 including a latch plate 14 installed on the upper frame 1 or a counterweight by means of a bolt or the like and a striker 7 installed on the latch plate 14 in forward and backward directions (i.e., in the traveling direction of the construction machine) so that a locker (not shown) of the catch device 5 is engaged with or disengaged from the striker, the latch device being configured to limit the movement of the hood 4 in the leftward and rightward directions (i.e., the left and right width directions of the construction machine) when the hood 4 is closed; and
a position guide 10 installed on the inner surface of the hood 4 by means of a bolt or the like and having a retaining protrusion 11 formed at a lower end thereof so as to be detachably engaged with a sliding groove 12 formed on one side of the latch plate 14, the position guide being configured to limit the movement of the hood 4 in the forward and backward directions when the hood 4 is closed.

The sliding groove 12 has a guide surface 15 formed thereof so as to slant toward the hood 4 side and the retaining protrusion 11 has a sliding surface 16 slantingly formed on an underside thereof so as to be in close contact with the guide surface 15 so that the retaining protrusion 11 slides smoothly on the sliding groove 12 while the hood 4 is opened or closed.

In the drawings, a non-explained reference numeral denotes a supporting part formed at one side of the latch plate 14 to have a thickness greater than that of the retaining protrusion 11 so as to support the position guide 10 so that the position guide 10 is smoothly seated on the latch plate 14.

Hereinafter, a use example of a hook locking apparatus of an engine room for a construction machine in accordance with an embodiment of the present invention will be described in detail with reference to the accompanying drawings.

As shown in Fig. 4, in the case where the hood 4 openably and closably connected to the cowl frame by means of the hinge 3 is opened or closed by holding a handle grip (not shown), the hood 4 can be locked or unlocked by the catch device 5 installed on the inner surface of the hood 4 and the striker 7 of the latch device 6 installed on the upper frame 1 so that the locker of the catch device 5 is engaged with or disengaged from the striker 7. In this case, a configured in which the hood 4 is opened or closed by the attachment and detachment between the catch device 5 and the latch device 6 is used in the art to which the present invention pertains, and thus the detailed description thereof will be omitted to avoid redundancy.

When the hood 4 is changed to a closed state, the locker of the catch device 5 installed on the inner surface of the hood 4 is engaged with the striker 7 of the latch device 6 so that the movement of the hood 4 in the leftward and rightward directions can be limited. This configuration is the same as that of Fig. 12 in which when the hood 4 is closed, the movement of the hood 4 in the leftward and rightward directions can be limited by the striker 7 of the latch device 6.

In addition, the retaining protrusion 11 of the position guide 10 installed on the inner surface of the hood 4 and the sliding groove 12 formed on the latch plate 14 to correspond to the retaining protrusion 11 is slidingly engaged with each other. In other words, when the hood 4 is closed, the sliding surface 16 of the retaining protrusion 11 slides along the guide surface 15 formed on the sliding groove 12 so that the retaining protrusion 11 can be smoothly engaged with the sliding groove 12. For this reason, when the hood 4 is closed, the retaining protrusion 11 is seated on the sliding groove 12 so that the retaining protrusion 11 is prevented from being moved in the forward and backward directions to limit the movement of the hood 4 in the forward and backward directions.

As described above, when the hood 4 is closed, the engagement of the locker of the catch device 5 with the striker 7 of the latch device 6 can restrict the movement of the hood 4 in the leftward and rightward directions. Further, the engagement of the retaining protrusion 11 of the position guide 10 with the sliding groove 12 of the latch plate 14 can limit the movement of the hood 4 in the forward and backward directions.

Therefore, the manufacturing cost can be reduced by lightweightness of the hood 4 (for example, made of a flexible thin steel plate), and the hood can be prevented from being deformed by an external force caused by vibration that occurs in the construction machine during the operation.

### INDUSTRIAL APPLICABILITY

In accordance with the hood locking apparatus of an engine room for a construction machine in accordance with the present invention as constructed above, the movement of the hood in the leftward, rightward, forward, and backward directions due to an external force caused by vibration occurring during the operation can be limited to prevent the damage of the hood. Even in the case where the hood is formed of a plastic material to reduce the manufacturing cost and achieve lightweightness, rigidity of the hood can be maintained.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A hood locking apparatus of an engine room for a construction machine including an upper frame, a cowl frame installed to form an engine room on the upper frame, and a hood openably and closably connected to the cowl frame by means of a hinge, the apparatus comprising:
a catch device installed on an inner surface of the hood;
a latch device including a latch plate installed on the upper frame and a striker installed on the latch plate in forward and backward directions so that a locker of the catch device is engaged with or disengaged from the striker, the latch device being configured to limit the movement of the hood in the leftward and rightward directions when the hood is closed; and
a position guide installed on the inner surface of the hood 4 and having a retaining protrusion formed at a lower end of the position guide so as to be detachably engaged with a sliding groove formed on one side thereof, the position guide being configured to limit the movement of the hood in the forward and backward directions when the hood is closed.

2. The hood locking apparatus according to claim 1, wherein the sliding groove has a guide surface formed thereon so as to slant toward the hood side and the retaining protrusion has a sliding surface slantingly formed on an underside thereof so as to be in close contact with the guide surface so that the retaining protrusion slides smoothly on the sliding groove while the hood is opened or closed.
